# EUROPÄISCHE PATENTANMELDUNG

(11) **EP 2 063 226 A2**
(43) Veröffentlichungstag der Anmeldung: **27.05.2009**
(21) Anmeldenummer: 08105418.1
(22) Anmeldetag: 24.09.2008
(51) Int. Cl.: G01C 21/36, G06F 3/048

(54) **Verfahren und vorrichtung zum bereitstellen einer information über interessante orte mit einem navigationssystem**

(30) Priorität: 22.11.2007 DE 102007056328
(71) Anmelder: Robert Bosch GmbH, 70442 Stuttgart (DE)
(72) Erfinder: Hess, Steffen, 74343, Sachsenheim (DE); Baierl, Wolfgang, 73630, Remshalden (DE)

(57) **Zusammenfassung**

Die Erfindung betrifft ein Verfahren zum Definieren eines geografischen Bereichs in einem Kartenausschnitt zur Verwendung in einem Navigationsgerät, mit folgenden Schritten:
- Auswählen einer Bereichsform;
- Positionieren der ausgewählten Bereichsform auf dem Kartenausschnitt an einer gewünschten Position;
- Durchführen einer Funktion des Navigationsgeräts abhängig von einem durch die auf dem Kartenausschnitt positionierte Bereichsform bestimmten geografischen Bereich.

## Beschreibung

### Technisches Gebiet

Die Erfindung betrifft allgemein das Gebiet von Navigationssystemen und insbesondere Navigationssysteme, mit denen Bereiche in einer Kartendarstellung definiert werden können, für die bestimmte Funktionen ausgeführt werden sollen. Insbesondere betrifft die Erfindung das Gebiet von Navigationssystemen, in denen neben einer Routeninformation auch interessante Orte (Points of Interest (POIs)), wie z.B. Restaurants, Tankstellen und dgl., angezeigt werden können.

### Stand der Technik

Navigationssysteme nutzen neben der für die Navigation erforderlichen Karteninformationen in der Regel zusätzliche weitere Informationen über interessante Orte, die POIs. Der Nutzer hat die Möglichkeit, POIs einer bestimmten Kategorie anzeigen zu lassen, die dann meist in Abhängigkeit von der Entfernung zum aktuellen Standort des Benutzers oder zu Orten entlang einer ermittelten Fahrtroute in der Navigationskarte dargestellt werden.

Oftmals ist es für einen Benutzer wünschenswert, bestimmte Funktionen des Navigationssystems nur in einem bestimmten, frei vom Benutzer definierten geografischen Bereich durchführen zu lassen, wie z.B. eine Routenplanung oder die Anzeige von Informationen über bestimmte POIs. Herkömmliche Navigationssysteme ermöglichen jedoch nur die Anzeige von POIs in einem vordefinierten oder angebbaren Umkreis um den Standort oder in einem Korridor entlang einer ermittelten Fahrtroute. Eine Anzeige der verfügbaren POIs in einem frei wählbaren geografischen Bereich außerhalb des Korridors oder in einem Bereich außerhalb des Standorts des Benutzers ist bislang nicht vorgesehen.

Bei Navigationssystemen mit einer geringen Speicherkapazität, wie z.B. demjenigen, das in WO 01/98734 A1 offenbart ist, sind Verfahren bekannt, mit denen ein geografischer Bereich (Korridor) um eine ermittelte Route definiert wird. Die Größe des Korridors ist dabei vorgegeben oder kann in Abhängigkeit von bestimmten Parametern während des Betriebs automatisch geändert werden. Die Definition des Korridors ermöglicht es, nur diejenigen Karteninformationen in einen internen Speicher des Navigationsgeräts zu speichern, die für die Darstellung und Routenführung entlang der zuvor ermittelten Route notwendig sind.

Es ist daher Aufgabe der vorliegenden Erfindung, ein Verfahren und eine Vorrichtung bereitzustellen, mit der ein geografischer Bereich in einfacher Weise in einem Navigationssystem definiert werden kann und wobei darüber hinaus eine Ausgabe von POIs an einen Benutzer in flexibler Weise möglich ist.

### Offenbarung der Erfindung

Diese Aufgabe wird durch das Verfahren gemäß Anspruch 1 sowie durch das Navigationsgerät gemäß dem nebengeordneten Anspruch gelöst.

Weitere vorteilhafte Ausgestaltungen der Erfindung sind in den abhängigen Ansprüchen angegeben.

Gemäß einem ersten Aspekt ist ein Verfahren zum Definieren eines geografischen Bereichs in einem Kartenausschnitt zur Verwendung in einem Navigationsgerät vorgesehen. Das Verfahren umfasst das Auswählen einer Bereichsform, das Positionieren der ausgewählten Bereichsform auf dem Kartenausschnitt an einer gewünschten Position sowie das Durchführen einer Funktion des Navigationsgeräts abhängig von einem durch die auf dem Kartenausschnitt positionierte Bereichsform bestimmten geografischen Bereich.

Das obige Verfahren hat den Vorteil, dass der Benutzer in einfacher Weise einen beliebigen geografischen Bereich auswählen kann, in dem POIs an den Benutzer ausgegeben werden können. Der vom Benutzer bestimmte geografische Bereich ist vom Standort des Benutzers und von dessen gewählter Fahrtroute unabhängig.

Weiterhin kann die ausgewählte Bereichsform aus mehreren Bereichsformoptionen, insbesondere einem rechteckigen Bereich, einem elliptischen Bereich und einem Polygonbereich, ausgewählt werden.

Gemäß einer Ausführungsform kann die auf dem Kartenausschnitt positionierte Bereichsform verformt werden, insbesondere gestaucht, gedreht, verschwenkt, oder verzerrt.

Weiterhin kann mindestens einer der drei Schritte
- Auswählen der Bereichsform,
- Positionieren der ausgewählten Bereichsform und/oder
- Verformen der Bereichsform durch Betätigen eines Dreh-Drück-Stellers durchgeführt werden.

Alternativ oder zusätzlich kann mindestens einer der genannten drei Schritte durch Bedienen eines berührungsempfindlichen Bildschirms des Navigationsgeräts durchgeführt werden, wobei das Bedienen durch Antippen einer bestimmten Position auf dem Bildschirm und/oder durch Antippen und Ziehen entlang einer Oberfläche des Bildschirms durchgeführt wird.

Gemäß einer Ausführungsform können eines oder mehrere Kategoriensymbole zur Auswahl von Kategorien eines auf dem Kartenausschnitt anzeigbaren interessanten Ortes angezeigt werden, wobei als Funktion abhängig von der positionieren Bereichsform und abhängig von mindestens einer ausgewählten Kategorie anzuzeigende interessante Orte ermittelt werden und wobei ein Symbol zur Darstellung des anzuzeigenden interessanten Ortes auf dem Kartenausschnitt an einer durch den interessanten Ort zugeordneten Positionsinformation definierten Position angezeigt wird.

Alternativ oder zusätzlich kann als Funktion eine Routenermittlung durchgeführt werden, wobei bei der Routenermittlung eine Route ausschließlich oder bevorzugt entweder in dem durch die positionierte Bereichsform definierten geografischen Bereich oder außerhalb davon ermittelt wird.

Gemäß einem weiteren Aspekt ist ein Navigationsgerät zum Definieren eines geografischen Bereichs in einem Kartenausschnitt vorgesehen. Das Navigationsgerät umfasst eine Ausgabeeinheit zum Ausgeben des Kartenausschnitts, eine Eingabeeinheit zum Durchführen einer Eingabe in das Navigationsgerät, einen Datenspeicher zum Speichern von Karteninformationen sowie eine Verarbeitungseinheit, die ausgebildet ist, so dass eine Bereichsform über die Eingabeeinheit auswählbar ist, so dass die ausgewählte Bereichsform auf dem Kartenausschnitt an einer gewünschten Position mithilfe der Eingabeeinheit positionierbar ist und so dass eine Funktion abhängig von einem durch die auf dem Kartenausschnitt positionierte Bereichsform bestimmten geografischen Bereich ausgeführt wird.

Weiterhin kann der Datenspeicher ausgebildet sein, um weiterhin eine POI-Information über interessante Orte zu speichern, wobei die Verarbeitungseinheit ausgebildet ist, auf der Ausgabeeinheit eines oder mehrere Kategoriensymbole zur Auswahl von Kategorien eines auf dem Kartenausschnitt anzeigbaren interessanten Ortes anzuzeigen, als Funktion abhängig von der positionieren Bereichsform und abhängig von mindestens einer ausgewählten Kategorie anzuzeigende interessante Orte zu ermitteln und ein Symbol zur Darstellung des anzuzeigenden interessanten Ortes auf dem Kartenausschnitt an einer durch der dem interessanten Ort zugeordneten Positionsinformation definierten Position anzuzeigen.

Gemäß einem weiteren Aspekt ist ein Computerprogramm vorgesehen, das einen Programmcode enthält, der, wenn er auf einer Datenverarbeitungseinheit ausgeführt wird, das oben beschriebene Verfahren ausführt.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine schematische Darstellung eines Navigationsgeräts gemäß einer Ausführungsform der Erfindung;
Fig. 2 eine Darstellung einer Benutzerschnittstelle zur Auswahl des geografischen Bereichs und zur Auswahl der Art der POIs gemäß einer ersten Ausführungsform;
Fig. 3 eine weitere Darstellung einer Benutzerschnittstelle zur Auswahl des geografischen Bereichs und zur Auswahl der Art der POIs gemäß einer zweiten Ausführungsform.

### Beschreibung der Ausführungsformen

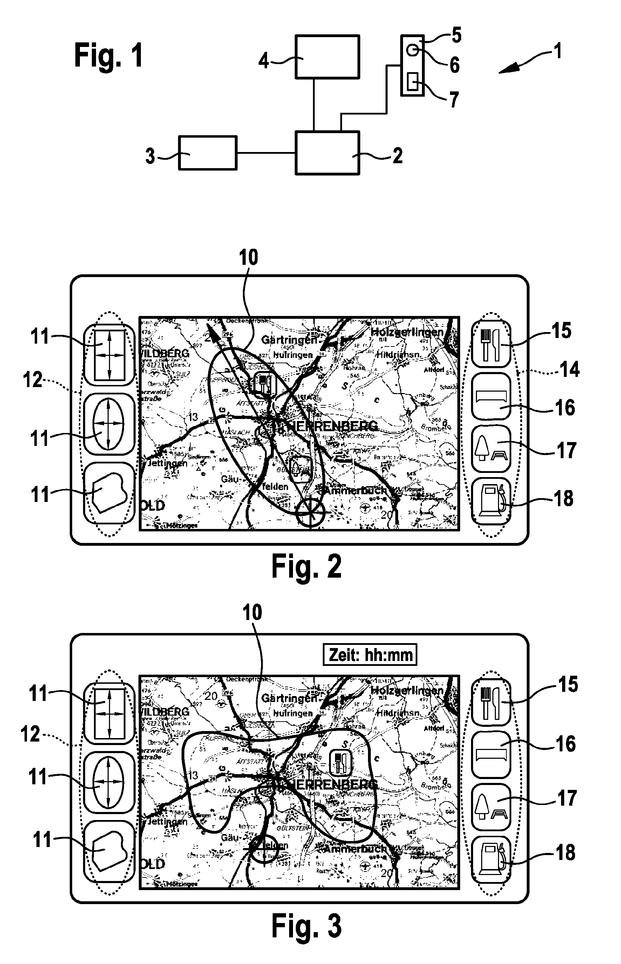

In Fig. 1 ist eine schematische Darstellung eines Navigationsgeräts 1 gemäß einer Ausführungsform der Erfindung gezeigt. Das Navigationsgerät 1 umfasst eine Verarbeitungseinheit 2, die mit einem Datenspeicher 3 kommunizieren kann, um Daten abzurufen. In dem Datenspeicher 3 sind Karteninformationen über geografische Daten, Routeninformationen sowie Informationen über interessante Orte als POI-Informationen gespeichert. Die POI-Informationen umfassen Angaben über die Art des interessanten Ortes, Positionsdaten über die geografische Position des interessanten Ortes und Angaben, über die die interessanten Orte gemäß einer Klassifikation auswählbar sind.

Die Verarbeitungseinheit 2 ist mit einer Ausgabeeinheit 4 verbunden. Die Ausgabeeinheit 4 umfasst z.B. einen Bildschirm, auf dem eine geografische Landkarte gemäß den in dem Datenspeicher 3 gespeicherten Karteninformationen angezeigt werden kann. Zudem können je nach Auswahl durch einen Benutzer die durch die POI-Informationen angegebenen interessanten Orte an einer entsprechenden, durch die durch den interessanten Orten zugeordneten Positionsdaten definierte Position auf dem dargestellten Kartenabschnitt angezeigt werden.

Die Verarbeitungseinheit 2 ist weiterhin mit einer Eingabeeinheit 5 verbunden, die ein oder mehrere Bedienelemente aufweist, wie beispielsweise einen oder mehrere Dreh-Drück-Steller 6, eine Eingabetaste 7 und dgl.

Gemäß einer weiteren Ausführungsform sind die Ausgabeeinheit 4 und die Eingabeeinheit 5 in Form eines berührungsempfindlichen Bildschirms (Touchscreen) ausgebildet, so dass Eingaben in das Navigationsgerät durch Berühren des Bildschirms an einer geeigneten Position und/oder durch Ziehen eines Fingers entlang der Oberfläche des Bildschirms erfolgen können.

Die Verarbeitungseinheit 2 ist im Wesentlichen so ausgestaltet, dass sie die Hauptfunktionen eines Navigationsgeräts, wie z.B. eine Routenberechnung und eine Zielführung, ausführen kann. Zur Zielführung kann die Verarbeitungseinheit 2 weiterhin mit einem Ortserkennungsdetektor, wie z.B. einem GPS-Empfänger verbunden sein. Zudem ist die Verarbeitungseinheit 2 ausgebildet, um aus den Karteninformationen eine Ausgabeinformation zu erzeugen, die auf der Ausgabeeinheit 4 als Kartenausschnitt angezeigt werden kann, der ein geografisches Gebiet virtuell abbildet. Durch Verwenden der Bedienelemente der Eingabeeinheit 5 lässt sich dieser Kartenausschnitt in geeigneter Weise in einem Auswahlmodus vergrößern (heranzoomen), verkleinern (herauszoomen), horizontal und vertikal verschieben und dgl. Der Auswahlmodus kann durch Drücken der Eingabetaste beendet werden.

Bei Verwenden eines Touchscreens als kombinierte Eingabe-/Ausgabeeinheit kann in dem Auswahlmodus der Kartenausschnitt durch Ziehen des Fingers entlang der Bildschirmoberfläche verschoben und durch Ziehen des Fingers entlang einer Zoom-Leiste, die in einem bestimmten Abschnitt des Bildschirms dargestellt wird, vergrößert bzw. verkleinert werden.

Die in dem Datenspeicher 3 gespeicherten POI-Informationen sind weiterhin jeweils mit einer Positions- und einer Klassifizierungsinformation versehen. Dadurch können interessante Orte durch geeignete, von der Klassifizierungsinformation abhängige Symbole auf dem Kartenausschnitt, der auf der Ausgabeeinheit 4 dargestellt wird, entsprechend einer Auswahl durch den Benutzer ausgegeben werden.

Die Auswahl eines geografischen Bereichs durch den Benutzer erfolgt durch Definieren eines Bereichs 10, in dem (oder außerhalb dessen) die interessanten Orte gemäß der POI-Information dargestellt werden sollen. Eine erste Ausführungsform des Verfahrens wird anhand der Fig. 2 erläutert. Dem Benutzer wird mithilfe der Ausgabeeinheit 4 eine Vorgabe von mehreren verschiedenen, vorbestimmten Bereichsformen 11 in einem linken Abschnitt 12 des Bildschirms der Ausgabeeinheit 4 zur Auswahl angezeigt. Der Benutzer kann als Bereichsformen 11 einen rechteckigen Bereich, einen ellipsenförmigen Bereich oder einen Polygonbereich mit Hilfe eines Bedienelements, wie z.B. dem Dreh-Drück-Steller, auswählen. Durch eine Auswahl der entsprechenden Bereichsform 11 für den Umriss des zu definierenden geografischen Bereichs 10 wird dieser auf dem Kartenausschnitt dargestellt. Die Darstellung des zu definierenden Bereichs 10 auf dem Kartenausschnitt erfolgt durch Anzeigen einer Umrisslinie, eines teilweise transparent farblich abgehobenen Bereichs oder eines schattierten flächigen Bereichs.

Durch eine geeignete Bedienung der Bedienelemente der Eingabeeinheit 5, wie z.B. dem Dreh-Drück-Steller oder einem weiteren Bedienelement, wie z.B. einem weiteren Dreh-Drück-Steller, kann der zu definierende Bereich 10 auf dem Kartenausschnitt verschoben bzw. geformt werden.

Im Detail kann die Positionierung des zu definierenden Bereichs durchgeführt werden, indem nach der erfolgten Auswahl der Bereichsform 11 die Position des zu definierenden Bereichs 10 auf dem Kartenausschnitt über den Dreh-Drück-Steller 6 festgelegt wird. Dabei kann durch Drehen des Dreh-Drück-Stellers 6 der zu definierende Bereich 10 vertikal bzw. horizontal verschoben werden. Durch Drücken des Dreh-Drück-Stellers 6 wird zwischen den Optionen des horizontalen und vertikalen Verstellens umgeschaltet. Der Abschluss dieser Aktion wird durch einen Tastendruck der Eingabetaste 7 bestätigt.

Neben einer vertikalen oder horizontalen Verschiebung kann auch eine Drehung des zu definierenden Bereichs 10 um eine festgelegte Position auf dem Kartenausschnitt, wie z.B. die Position des Benutzers bzw. des Navigationsgeräts, durchgeführt werden, wobei über den Dreh-Drück-Steller die Bereichsform um eine zuvor festgelegte Position oder die aktuelle Position des Benutzers verschwenkt werden kann. Die Orientierung des zu definierenden Bereichs 10 kann über den Dreh-Drück-Steller oder einen weiteren Dreh-Drück-Steller festgelegt werden. Das Ende dieser Aktion kann durch einen erneuten Tastendruck der Eingabetaste bestätigt werden.

Anschließend kann über den Dreh-Drück-Steller bzw. einen weiteren Dreh-Drück-Steller die horizontale bzw. vertikale Ausdehnung des zu definierenden Bereichs 10 (Dehnung oder Stauchung des vorbestimmten Bereichs 10) verändert werden, wobei durch Drücken des Dreh-Drück-Stellers zwischen den Optionen des Einstellens der horizontalen und vertikalen Ausdehnung umgeschaltet werden kann.

Durch eine entsprechende Bestätigung, z.B. über einen Tastendruck, kann die Formung des zu definierenden Bereichs 10 beendet werden.

Bei Auswahl des Polygonbereichs kann das Polygon, das den zu definierenden Bereich 10 markiert, geformt werden, indem durch Drücken des Dreh-Drück-Stellers 6 ein Eckpunkt des Polygons ausgewählt wird. Durch Drehen des Dreh-Drück-Stellers 6 kann zwischen gewünschten Eckpunkten des Polygons gesprungen werden, wobei ein Markierter der Eckpunkte farbig, grafisch oder durch veränderte Helligkeit als ausgewählter Eckpunkt auf der Ausgabeeinheit 4 dargestellt wird. Durch Drücken des Dreh-Drück-Stellers 6 kann der ausgewählte Eckpunkt ausgewählt und durch Drehen in horizontaler, vertikaler oder sonstiger Richtung verschoben werden. Ein Umschalten zwischen den Verstellrichtungen kann durch Drücken der Eingabetaste oder eines weiteren Bedienelements erfolgen.

Es kann vorgesehen sein, dass die Schritte zur Formgebung und Positionierung des zu definierenden Bereichs 10 auf dem Kartenausschnitt zur Definition des geografischen Bereichs in beliebiger Reihenfolge ausgeführt werden.

Nachdem der zu definierende Bereich 10 geformt und so auf dem Kartenausschnitt positioniert ist, dass der geografische Bereich, der den Benutzer interessiert, selektiert ist, können Kategorien für interessante Orte ausgewählt werden. Z.B. kann der Benutzer durch Auswählen von Kategoriensymbolen 14 in einem rechten Abschnitt 13 des Bildschirms beispielsweise die Kategorien "Restaurant" 15, "Hotel" 16, "Rastplatz" 17 oder "Tankstelle" 18 auswählen, die in dem oben definierten Bereich angezeigt werden sollen. Dabei kann der Benutzer eines oder mehrere gewünschte Kategoriensymbole 14 über eine Menüführung auswählen. Dies kann durch Betätigen des oder eines weiteren Dreh-Drück-Stellers erfolgen. Beendet wird die Auswahl der Kategorien durch erneutes Betätigen der Eingabetaste. Weiterhin kann die Auswahl der Kategorien durch Auswählen von Checkboxen oder durch Antippen eines entsprechenden Begriffs in einer Liste erfolgen.

Es können weitere Möglichkeiten der Eingabe der auszuwählenden Kategorien vorgesehen sein, wie z.B. eine Eingabe der Kategorien als Text.

Durch Bestätigen der Kategorienauswahl, z.B. durch einen Tastendruck auf der Eingabetaste 6, generiert die Verarbeitungseinheit 2 eine Datenabfrage und ermittelt die in Frage kommenden POI-Informationen in dem Datenspeicher 3.So werden abhängig von dem definierten Bereich 10 auf dem Kartenausschnitt und abhängig von den ausgewählten Kategorien mithilfe eines geeigneten Filters diejenigen POIs aus dem Speicher 3 abgerufen, die in dem definierten (ausgewählten) Bereich 10 liegen und die den ausgewählten Kategorien entsprechen. Die abgerufenen POIs werden durch geeignete Symbole auf dem Bildschirm der Ausgabeeinheit 4 angezeigt. Die Symbole können die jeweiligen Kategorien der POIs angeben.

Gemäß einer weiteren Ausführungsform sind die Ausgabeeinheit 4 und die Eingabeeinheit 5 als berührungsempfindlicher Bildschirm (Touchscreen) ausgebildet. Elemente gleicher oder vergleichbarer Funktion sind mit den gleichen Bezugszeichen versehen.

Bei der Verwendung eines berührungsempfindlichen Bildschirms kann das oben beschriebene Auswählen der Bereichsform nur durch Antippen oder durch Antippen der gewünschten Bereichsform sowie Ziehen an eine gewünschte Position auf dem Kartenausschnitt erfolgen. Dies ist beispielsweise in Fig. 3 dargestellt. Die Position des Fingers gibt die Position des Fingers des Benutzers auf dem Bildschirm an. Weiterhin kann ein Verschieben des zu definierenden Bereichs 10 auf dem Kartenausschnitt durchgeführt werden, indem das Innere des zu definierenden Bereichs 10 mit einem Finger berührt und der Finger anschließend entlang der Oberfläche des Bildschirms zu einer Position geführt wird, die für den auszuwählenden Bereich auf dem Kartenausschnitt gewünscht ist. Während der Bewegung des Fingers auf der Oberfläche des Bildschirms bewegt sich die dargestellte Bereichsform unter dem Finger mit.

Ein Verformen der Bereichsform bzw. ein Vergrößern oder Verkleinern kann dadurch erfolgen, dass der Benutzer mit dem Finger einen Randabschnitt bzw. einen Eckabschnitt (oder vordefinierten Abschnitt) des zu definierenden Bereichs 10 antippt und den Finger auf der Oberfläche des Touchscreens entlang zieht, um so eine entsprechende Verformung des Umrisses des zu definierenden Bereichs 10 zu erreichen. So kann bei vorheriger Auswahl einer Polygonform als Bereichsform en das Polygon bereits mit einer Anzahl von Eckabschnitten vorgesehen werden. Verformungen der rechteckigen Bereichsform und der elliptischen Bereichsform können so entlang ihrer Mittenachsen vorgenommen werden.

Alternativ können bei der Verwendung eines Touchscreens die Kategoriensymbole 14 auf dem Bildschirm der Ausgabeeinheit 4 angeordnet sein, die der Benutzer durch Antippen mit dem Finger und durch Ziehen entlang der Bildschirmoberfläche in den definierten Bereich 10 auswählen kann. Alternativ kann ein Auswählen durch ein einfaches Antippen des Kategoriensymbols erfolgen. Ein nochmaliges Antippen eines bereits ausgewählten Kategoriensymbols 14 entfernt die entsprechende Kategorie aus der Auswahl.

Gemäß einer weiteren Ausführungsform kann ein vereinfachtes Navigationsgerät vorgesehen sein, das keine Definition des geografischen Bereichs ermöglicht, wobei jedoch die Kategorisierung der interessanten Orte auf die oben beschriebenen Weisen vorgenommen werden kann. Der geografische Bereich ist dann automatisch z.B. in Form eines Korridors um eine ermittelte Route oder um den Standort in einem definierten oder vorgebbaren Umkreis definiert.

Der gemäß obiger Vorgehensweise ausgewählte geografische Bereich könnte im Zusammenhang mit Navigationsfunktionen zur freien Definition eines in der Navigation zu meidenden Gebiets eingesetzt werden, d.h. der definierte geografische Bereich soll aus der Routenführung ausgeschlossen werden. Alternativ könnte der entsprechend obigen Verfahren ausgewählte Bereich bei der Routenermittlung bevorzugt berücksichtigt werden.

## Patentansprüche

1. Verfahren zum Definieren eines geografischen Bereichs in einem Kartenausschnitt zur Verwendung in einem Navigationsgerät, mit folgenden Schritten:
- Auswählen einer Bereichsform;
- Positionieren der ausgewählten Bereichsform auf dem Kartenausschnitt an einer gewünschten Position;
- Durchführen einer Funktion des Navigationsgeräts abhängig von einem geografischen Bereich, der durch die auf dem Kartenausschnitt positionierte Bereichsform bestimmt ist.

2. Verfahren nach Anspruch 1, wobei die ausgewählte Bereichsform aus mehreren Bereichsformoptionen, insbesondere einem rechteckigen Bereich, einem elliptischen Bereich und einem Polygonbereich, ausgewählt wird.

3. Verfahren nach Anspruch 1 oder 2, wobei die auf dem Kartenausschnitt positionierte Bereichsform verformt wird, insbesondere gestaucht, gedreht, verschwenkt oder verzerrt.

4. Verfahren nach einem der Ansprüche 1 bis 3, wobei mindestens einer der Schritte Auswählen der Bereichsform, Positionieren der ausgewählten Bereichsform und Verformen der Bereichsform durch Betätigen eines Dreh-Drück-Stellers durchgeführt wird.

5. Verfahren nach einem der Ansprüche 1 bis 3, wobei mindestens einer der Schritte Auswählen der Bereichsform, Positionieren der ausgewählten Bereichsform und Verformen der Bereichsform durch Bedienen eines berührungsempfindlichen Bildschirms des Navigationsgeräts durchgeführt wird,
wobei das Bedienen ein Antippen einer bestimmten Position auf dem Bildschirm und/oder ein Antippen sowie ein Ziehen entlang einer Oberfläche des Bildschirms umfasst.

6. Verfahren nach einem der Ansprüche 1 bis 5, wobei ein oder mehrere Kategoriensymbole zu Auswahl von Kategorien eines auf dem Kartenausschnitt anzeigbaren interessanten Ortes angezeigt werden, wobei als Funktion abhängig von der positionieren Bereichsform und abhängig von mindestens einer ausgewählten Kategorie anzuzeigende interessante Orte ermittelt werden und wobei ein Symbol zur Darstellung des anzuzeigenden interessanten Ortes auf dem Kartenausschnitt an einer durch die dem interessanten Ort zugeordneten Positionsinformation definierte Position angezeigt wird.

7. Verfahren nach einem der Ansprüche 1 bis 5, wobei als Funktion eine Routenermittlung durchgeführt wird, wobei bei der Routenermittlung eine Route ausschließlich oder bevorzugt entweder in dem durch die positionierte Bereichsform definierten geografischen Bereich oder außerhalb davon ermittelt wird.

8. Navigationsgerät zum Definieren eines geografischen Bereichs in einem Kartenausschnitt, umfassend:
- eine Ausgabeeinheit (4) zum Ausgeben des Kartenausschnitts;
- eine Eingabeeinheit (5) zum Durchführen einer Eingabe in das Navigationsgerät;
- einen Datenspeicher (3) zum Speichern von Karteninformationen;
- eine Verarbeitungseinheit (2), die ausgebildet ist, so dass eine Bereichsform über die Eingabeeinheit (5) auswählbar ist, so dass die ausgewählte Bereichsform auf dem Kartenausschnitt an einer gewünschten Position mithilfe der Eingabeeinheit (5) positionierbar ist und so dass eine Funktion abhängig von einem durch die auf dem Kartenausschnitt positionierte Bereichsform bestimmten geografischen Bereich ausgeführt wird.

9. Navigationsgerät nach Anspruch 8, wobei der Datenspeicher (3) ausgebildet ist, um weiterhin eine POI-Information über interessante Orte zu speichern, wobei die Verarbeitungseinheit (2) ausgebildet ist, auf der Ausgabeeinheit eines oder mehrere Kategoriensymbole zur Auswahl von Kategorien eines auf dem Kartenausschnitt anzeigbaren interessanten Ortes anzuzeigen, als Funktion abhängig von der positionieren Bereichsform und abhängig von mindestens einer ausgewählten Kategorie anzuzeigende interessante Orte zu ermitteln und ein Symbol zur Darstellung des anzuzeigenden interessanten Ortes auf dem Kartenausschnitt an einer durch die dem interessanten Ort zugeordneten Positionsinformation definierte Position anzuzeigen.

10. Computerprogramm, das einen Programmcode enthält, der, wenn er auf einer Datenverarbeitungseinheit ausgeführt wird, ein Verfahren gemäß einem der Ansprüche 1 bis 7 ausführt.
